(19) Europäisches Patentamt European Patent Office Office européen des brevets

(11) **EP 2 916 281 A1**

(12) **EUROPEAN PATENT APPLICATION**
published in accordance with Art. 153(4) EPC

(43) Date of publication:
09.09.2015 Bulletin 2015/37

(51) Int Cl.:
***G06Q 30/02*** (2012.01)

(21) Application number: 13850806.4

(86) International application number:
PCT/CN2013/074109

(22) Date of filing: 11.04.2013

(87) International publication number:
WO 2014/067261 (08.05.2014 Gazette 2014/19)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 29.10.2012 CN 201210421172

(71) Applicant: Beijing Jingdong Century Trading Co., Ltd.
Beijing 100176 (CN)

(72) Inventor: LI, Dandan
Beijing 100176 (CN)

(74) Representative: Dantz, Jan Henning et al
Am Zwinger 2
33602 Bielefeld (DE)

(54) **METHOD AND DEVICE FOR DETERMINING FESTIVAL HOT COMMODITY**

(57) The invention provides a method and a device for determining a festival best-selling commodity, which is capable of filtering a festival best-selling commodity more accurately from a large number of commodities. The method comprises the following steps of: for each commodity in a plurality of commodities, based on a comparison of sales of the commodity during a predetermined festival to sales in a predetermined time period during which the festival lasts, calculating a best-selling degree of the commodity during the festival; and determining a commodity with a higher best-selling degree as the festival best-selling commodity.

for each commodity in a plurality of commodities, based on a comparison of sales of the commodity during a predetermined festival tosales in a predetermined time period during which the festival lasts, calculating a best-selling degree of the commodity during the festival — S11

determining a commodity with a higher best-selling degree as the festival best-selling commodity. — S12

**FIG. 1**

EP 2 916 281 A1

**Description**

TECHNICAL FIELD

The invention relates to a method and a device for determining a festival best-selling commodity.

BACKGROUND ART

As is well known, a burst of consumption occurs during holidays or festivals, so dealers will go all out for a series of festival marketing activities such as brand promotions, discounting on commodities, issuing coupons and giveaways, etc.. Owing to advantages of electronic commerce in marketing, festival marketing in electronic commerce is not limited to traditional festivals such as the Spring Festival, the Mid-autumn Festival, the National Day holiday, etc., featured festivals such as the Mother's Day, the Father's Day, the Chinese Valentine's Day, the Day for the Singles, etc. are becoming indispensable festivals for marketing.

During festivals, sales of some commodities will increase owing to influence of incoming festivals, but others will be free of such influence. Therefore, in reality, festivals have different influences on sales of different commodities. A key part of festival marking is promotions of festival themed commodities so as to attract consumers to visit electronic commerce websites, thereby enhancing recognition of the dealers' brands and boosting amounts of visits to and purchases of all the commodities. So it becomes crucial to for the selection of festival themed commodities. Because such commodities are festival-themed, they are usually more popular during festivals. It is necessary for the dealers to consider and identify which specific commodities are festival-themed. Identified festival best-selling commodities can serve as candidate commodities for festival marketing, and the stock of such commodities can be increased in advance.

The current methods for identifying festival best-selling commodities mainly rely on the dealers' experiences plus some sales data as reference. However, with the expansion of business fields, and the changes and updates in different categories of commodities, and with many featured festivals emerging, and some other external influential factors, results obtained merely through experiences and simple gathering and statistical analysis of sales will not meet the dealers' requirements for more and more refined marketing. Therefore, a method for identifying a festival best-selling commodity that is suitable for filtering festival best-selling commodities more accurately from among a large number of commodities is required.

SUMMARY OF THE INVENTION

In view of the above, the present invention provides a method and a device for determining a festival best-selling commodity, which are capable of filtering a festival best-selling commodity more accurately from a large number of commodities.

In order to realize the aforesaid object, according to one aspect, the present invention provides a method for determining a festival best-selling commodity.

The method for determining a festival best-selling commodity comprises: for each commodity in a plurality of commodities, based on a comparison of sales of the commodity during a predetermined festival to sales in a predetermined time period during which the festival lasts, calculating a best-selling degree of the commodity during the festival; and determining a commodity with a higher best-selling degree as the festival best-selling commodity.

Optionally, the calculating a best-selling degree of the commodity during the festival comprises calculating according to the following formulae: fluctuation = festival sales / reference sales, locality = mean daily festival sales / mean daily local sales, and the best-selling degree of the commodity during the festival = (the fluctuation + the locality) * an adjustment weight, wherein the festival sales represents a sales volume of the commodity during the predetermined festival, the reference sales represents a sales volume of the commodity in a time period of a length the same as the festival preceding and following the festival, the mean daily festival sales represents mean daily sales of the commodity in the predetermined festival, the mean daily local sales represents mean daily sales of the commodity in a predetermined time period during which the festival lasts, and the adjustment weight represents a predetermined weight.

Optionally, the calculating a best-selling degree of the commodity during the festival comprises calculating according to the following formulae: fluctuation = festival sales / reference sales - festival promotion / reference promotion, locality = mean daily festival sales / mean daily local sales - mean daily festival promotion / mean daily local promotion, and the best-selling degree of the commodity during the festival = (the fluctuation + the locality) * an adjustment weight, wherein the festival sales represents a sales volume of the commodity during the predetermined festival, the reference sales represents a sales volume of the commodity in a time period of a length the same as the festival preceding and following the festival, the mean daily festival promotion represents a mean daily promotion discount amount generated by sale of the commodity at a promotional price during the predetermined festival, the reference promotion represents a mean promotion discount amount generated by sale of the commodity at a promotional price in a time period of a length the same as the festival preceding and following the festival, the mean daily festival sales represents mean daily sales of the commodity during the predetermined festival, the mean daily local sales represents mean daily sales in a predetermined time period during which the festival lasts, the mean daily festival promotion represents a mean daily promotion discount amount generated by sale of the commodity at a promotional price during the predetermined festival, the mean daily local promotion represents a mean daily promotion discount amount generated by sale of the commodity at a promotional price in a predetermined time period during which the festival lasts, and the adjusting weight represents a predetermined weight.

Optionally, the calculating a best-selling degree of the commodity during the festival comprises calculating according to the following formulae: fluctuation = ln (festival sales / reference sales - festival promotion / reference promotion), locality = ln (mean daily festival sales / mean daily local sales - mean daily festival promotion / mean daily local promotion), and the best-selling degree of the commodity during the festival = (the fluctuation + the locality) * adjustment weight, wherein the festival sales represents a sales volume of the commodity during the predetermined festival, the reference sales represents a sales volume of the commodity in a length the same as the festival preceding and following the festival, the mean daily festival promotion represents a mean promotion discount amount generated by sale of the commodity at a promotional price during the predetermined festival, the reference promotion represents a mean promotion discount amount generated by sale of the commodity at a promotional price in a time period of a length the same as the festival prceding and following the festival, the mean daily festival sales represents the mean daily sales of the commodity during the predetermined festival, the mean daily local sales represents the mean daily sales in a predetermined time period during which the festival lasts, the mean daily festival promotion represents a mean daily promotion discount amount generated by sale of the commodity at a promotional price during the predetermined festival, the mean daily local promotion represents a mean daily promotion discount amount generated by sale of the commodity at a promotional price in a predetermined time period during which the festival lasts, ln(*) represents a natural logarithm, and the adjusting weight represents a predetermined weight.

Optionally, the adjustment weight is calculated according to the following formula: the adjustment weight = (the festival sales / ln the festival promotion) * an ordinary period sales ranking score, wherein the ordinary period sales ranking score is a value determined based on a ranking of sales of the category to which the commodity belongs among all categories, and a category with a lower ranking corresponds to a higher ordinary period sales ranking score.

According to another aspect of the present invention, a device is provided for determining a festival best-selling commodity.

The device for determining a festival best-selling commodity according to the present invention comprises: a commodity festival scoring module for calculating, for each commodity in a plurality of commodities and based on a comparison of sales of the commodity during a predetermined festival to sales in a predetermined time period during which the festival lasts, a best-selling degree of the commodity during the festival; and a festival best-selling commodity identifying module for determining a commodity with a higher best-selling degree as the festival best-selling commodity.

Optionally, the commodity festival scoring module is further used for calculating according to the following formulae: fluctuation = festival sales / reference sales, locality = mean daily festival sales / mean daily local sales, and the best-selling degree of the commodity during the festival = (the fluctuation + the locality) * an adjustment weight, wherein the festival sales represents a sales volume of the commodity during the predetermined festival, the reference sales represents a sales volume of the commodity in a time period of a length the same as the festival preceding and following the festival, the mean daily festival sales represents mean daily sales of the commodity in the predetermined festival, the mean daily local sales represents mean daily sales of the commodity in a predetermined time period during which the festival lasts, and the adjustment weight represents a predetermined weight.

Optionally, the commodity festival scoring module is further for calculating according to the following formulae: fluctuation = festival sales / reference sales - festival promotion / reference promotion, locality = mean daily festival sales / mean daily local sales -mean daily festival promotion / mean daily local promotion, and the best-selling degree of the commodity during the festival = (the fluctuation + the locality) * an adjustment weight, wherein the festival sales represents a sales volume of the commodity during the predetermined festival, the reference sales represents a sales volume of the commodity in a time period of a length the same as the festival preceding or following the festival, the mean daily festival promotion represents a mean daily promotion discount amount generated by sale of the commodity at a promotional price during the predetermined festival, the reference promotion represents a mean promotion discount amount generated by sale of the commodity at a promotional price in a time period of a length the same as the festival preceding and following the festival, the mean daily festival sales represents mean daily sales of the commodity during the predetermined festival, the mean daily local sales represents mean daily sales in a predetermined time period during which the festival lasts, the mean daily festival promotion represents a mean daily promotion discount amount generated by sale of the commodity at a promotional price during the predetermined festival, the mean daily local promotion represents a mean daily promotion discount amount generated by sale of the commodity at a promotional price in a predetermined time period during which the festival lasts, and the adjusting weight represents a predetermined weight.

Optionally, the commodity festival scoring module is further used for calculating according to the following formulae: fluctuation = ln (festival sales / reference sales - festival promotion / reference promotion), locality = ln (mean daily festival sales / mean daily local sales - mean daily festival promotion / mean daily local promotion), and the best-selling degree of the commodity during the festival = (the fluctuation + the locality) * an adjustment weight, wherein the festival sales represents a sales volume of the commodity during the predetermined festival, the reference sales represents a sales volume of the commodity in a length the same as the festival preceding and following the festival, the mean daily festival promotion represents a mean promotion discount amount generated by sale of the commodity at a promotional price during the predetermined festival, the reference promotion represents a mean promotion discount amount generated by sale of the commodity at a promotional price in a time period of a length the same as the festival preceding and following the festival, the mean daily festival sales represents mean daily sales of the commodity during the predetermined festival, the mean daily local sales represents mean daily sales in a predetermined time period during which the festival lasts, the mean daily festival promotion represents a mean daily promotion discount amount generated by sale of the commodity at a promotional price during the predetermined festival, the mean daily local promotion represents a mean daily promotion discount amount generated by sale of the commodity at a promotion price in a predetermined time period during which the festival lasts, ln(*) represents a natural logarithm, and the adjusting weight represents a predetermined weight.

Optionally, the commodity festival scoring module is further used for calculating according to the following formulae: the adjustment weight = (the festival sales / ln the festival promotion) * an ordinary period sales ranking score, wherein the ordinary period sales ranking score is a value determined based on a ranking of sales of the category to which the commodity belongs among all categories, and a category with a lower ranking corresponds to a higher ordinary period sales ranking score.

According to the technical solution of the present invention, a festival best-selling commodity is determined by comparing sales during a festival to sales during a non-festival and taking into account the influences of promotions on sales. This helps objectively reflect influence of a festival on sales of a commodity, and the determination by dealers a festival best-selling commodity.

DESCRIPTION OF THE DRAWINGS

The drawings are used for better understanding of the present invention, and do not constitute inappropriate limitations of the present invention.

FIG. 1 is a schematic diagram of basic steps of the method for determining a festival best-selling commodity according to an embodiment of the present invention.

FIG. 2 is a schematic diagram of the device for determining a festival best-selling commodity according to an embodiment of the present invention.

FIG. 3 is a schematic diagram of a specific flow of the method for determining a festival best-selling commodity according to an embodiment of the present invention.

DETAILED DESCRIPTION OF THE PREFERRED EMBODIMENTS

The exemplary embodiments of the present invention are depicted below with reference to the drawings, and varieties of details of the embodiments of the present invention are included below for facilitating understanding. The embodiments should be regarded only as exemplary. So those skilled in the art should understand that varieties of changes and modifications can be made to the embodiments depicted herein, resulting in no deviation from the scope and spirit of the present invention. Similarly, for the sake of clarity and conciseness, depictions of commonly known functions and structures are omitted herein.

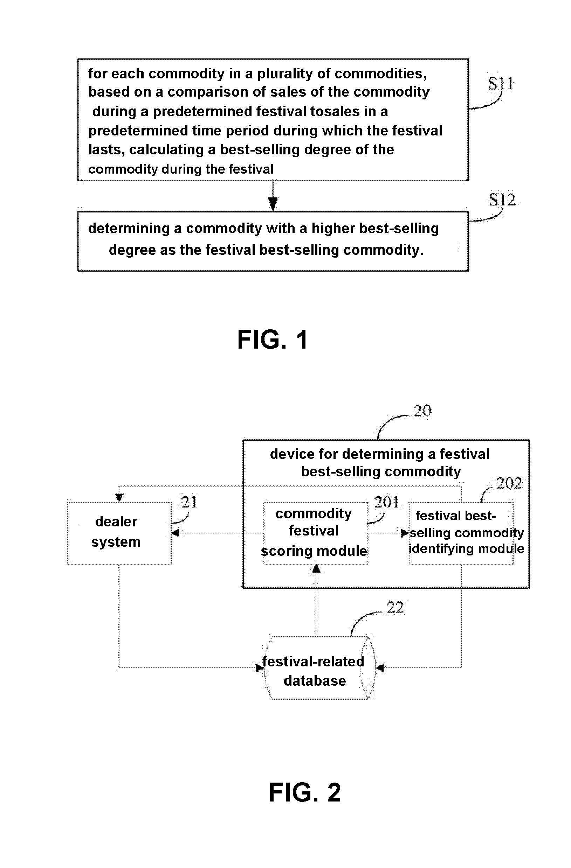

FIG. 1 is a schematic diagram of the basic steps of the method for determining a festival best-selling commodity according to an embodiment of the present invention. As shown in FIG. 1, the method for determining a festival best-selling commodity mainly comprises steps S11 and S12.

Step S11: for each commodity in a plurality of commodities, based on a comparison of sales of the commodity during a predetermined festival to sales in a predetermined time period during which the festival lasts, calculating a best-selling degree of the commodity during the festival

Step S12: determining a commodity with a higher best-selling degree as the festival best-selling commodity.

In step S11, the calculating can be performed specifically according to the following formulae:

$$\text{Fluctuation} = \text{festival sales} / \text{reference sales},$$

$$\text{locality} = \text{mean daily festival sales} / \text{mean daily local sales, and}$$

$$\text{the best-selling degree of the commodity during the festival} = (\text{the fluctuation} + \text{the locality}) * \text{an adjustment weight,}$$

wherein the festival sales represents a sales volume of the commodity during the predetermined festival, the reference sales represents a sales volume of the commodity in a time period of a length the same as the festival period preceding and following the festival, the mean daily festival sales represents mean daily sales of the commodity during the predetermined festival, the mean daily local sales represents mean daily sales of the commodity in a predetermined time period during which the festival lasts, and the adjustment weight represents a predetermined weight.

Increase in sales of a commodity during a festival may come from influences of the festival itself on one hand. On the other hand, in the case where promotions are performed, i.e., sale of a commodity at a promotional price (usually lower than a non-promotional price), sales of the commodity will possibly increase. Therefore, if promotions exist, for an actual reflection of influence of a festival on the sales of a commodity, the above mentioned fluctuation and locality may alternatively be calculated according to the following formulae:

$$\text{Fluctuation} = \text{festival sales} / \text{reference sales} - \text{festival promotion} / \text{reference promotion,}$$

$$\text{locality} = \text{mean daily festival sales} / \text{mean daily local sales} - \text{mean daily festival promotion} / \text{mean daily local promotion,}$$

wherein the mean daily festival promotion represents a mean daily promotion discount amount generated by sale of the commodity at a promotional price during the predetermined festival, the reference promotion represents a mean promotion discount amount generated by sale of the commodity at a promotional price in a time period of a length the same as the festival period preceding and following the predetermined festival period, , the mean daily festival promotion represents a mean daily promotion discount amount generated by sale of the commodity at a promotional price during the predetermined festival, the mean daily local promotion represents a mean daily promotional discount amount generated by sale of the commodity at a promotional price in a predetermined time period during which the festival lasts.

The above calculating may use the following natural logarithms (represented by ln(*)):

$$\text{Fluctuation} = \ln (\text{festival sales} / \text{reference sales} - \text{festival promotion} / \text{reference promotion}),$$

$$\text{Locality} = \ln (\text{mean daily festival sales} / \text{mean daily local sales} - \text{mean daily festival promotion} / \text{mean daily local promotion}).$$

The device for determining a festival best-selling commodity in the embodiment further takes into account factors such as different characteristics of festivals, influence of promotion, etc., so the identified commodity will have a strong festival characteristics. Specifically, as shown in FIG. 2, in which a schematic diagram of the device for determining a festival best-selling commodity according to an embodiment of the present invention presented, the device 20 for determining a festival best-selling commodity comprises a commodity festival scoring module 201 and a festival best-selling commodity identifying module 202. FIG. 2 also illustrates a dealer system 21 and a festival-related database 22.

The commodity festival scoring module 201 is used for calculating, for each commodity in a plurality of commodities and according to a comparison of sales of the commodity during a predetermined festival to sales in a predetermined time period during which the festival lasts, a best-selling degree of the commodity during the festival. The calculation may be performed in various modes as depicted above. In comprehensive consideration of factors such as sales, lengths of influential time periods of different festivals, promotional influences, etc., the calculation of festival scoring indexes obtains different scores of a commodity during different festivals. Besides, only a value of a relative quantity is calculated, eliminating the influence of an absolute quantity. So the scores of the same commodity in different festivals may be compared with each other, whereby a festival that has significant influence on the commodity may be reflected. On the basis of the commodity festival scoring module, influence of an absolute quantity and a daily sales weight may be additionally taken into account, to thereby calculate a festival relative score of the commodity. The festival best-selling commodity identifying module 202 is used for determining a commodity with a higher best-selling degree as the festival best-selling commodity.

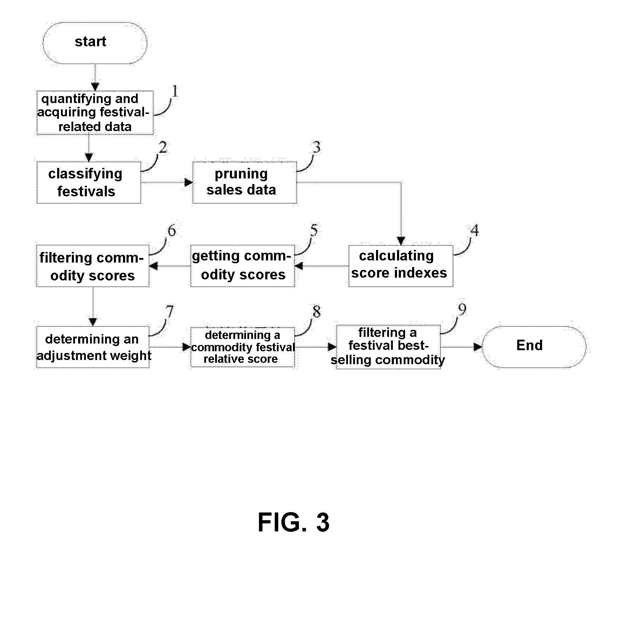

FIG. 3 is a schematic diagram of a specific flow of the method for determining a festival best-selling commodity according to an embodiment of the present invention.

Step 1: quantifying and acquiring festival-related data. Festival-related data are quantified and acquired, which include festival data, commodity data, and promotion data. Festival data denotes data regarding specific times of different festivals in a whole year, whether a festival relates to a public holiday, the length of the holiday, whether the date(s) of the festival is fixed, and whether the festival is a Chinese traditional festival. Commodity data are mainly commodity names, categories of commodities, sales volumes, sales volumes from corporate purchases, and sales from group purchases. The promotion is quantified as data on exposure of commodities during promotional activities and data on promotional discounts that customers enjoy when purchasing commodities in promotion.

Step 2: festival classification. Festivals are processed according to their classifications, since different festivals have different influences on sale of a commodity. For example, the acting time of influence on consumptions generated by the Spring Festival will last a relatively long time before the festival actually starts, and, on the contrary, drop during the festival period. But for Valentine's Day and Mother's Day, the acting influence on consumption lasts only as short as several days, but the sales on the actual festival day increases. Festivals in a whole year are classified according to attribute data by classifying festivals with similar characteristics into one classification, and a length of influential time is defined for festivals of each classification for calculating in the following steps.

Step 3: Pruning sales data. Sales data are pruned for filtering the changes in sales caused by collective purchases such as corporate purchases or group purchases to avoid misjudgment of a festival best-selling commodity.

Step 4: calculating a festival score data index for a commodity. The data for calculating the index comprise, in three aspects, commodity sales data, promotional discount data, and promotion exposure data. A gathering dimension is festival period data, reference period data, and local period data. According to results from the step of obtaining the festival characteristics, for festivals of different classifications, data during temporal lengths defined by the festivals themselves are respectively selected to be gathered into festival period data. Reference period data are gatherings of data during a period of the same temporal length as the festival period prior to and succeeding the festival. Local period data is a gathering of data in a seasonal quarter which covers the festival. Finally, for each festival, there should be statistical results of sums and daily means in different phases, i.e., prior to, succeeding and during the festival.

Step 5: getting a commodity festival score. The commodity festival score is mainly composed of two scores, i.e., a fluctuation score and a locality score. Calculations for different festivals are performed separately, wherein the fluctuation mainly reflects a fluctuating degree of a change in sales of a commodity during a festival as compared with sales of the commodity during an ordinary period, and the locality reflects a degree of importance of a festival period in a sale period of a commodity. In order to weaken the influence of promotions on sales of a commodity and highlight a festival effect on the commodity, it is necessary to take into account promotion data besides sales data in calculating the fluctuation and locality indexes. For eliminating the influence of quantity dimension, a logarithm calculation of relative ratio data is used. The specific formulae are as follows:

$$\text{Fluctuation} = \ln (\text{festival sales / reference sales - festival promotion / reference promotion}),$$

$$\text{locality} = \ln (\text{mean daily festival sales / mean daily local sales} - \text{mean daily festival promotion / mean daily local promotion}),$$

$$\text{a commodity festival score} = \text{the fluctuation} + \text{the locality}.$$

The commodity festival score only takes into account values of relative quantities, thereby eliminating the influence of absolute quantities. Therefore, different festival scores of an identical commodity may be compared to each other, whereby festivals that have significant influence on the same commodity may be identified.

Step 6: filtering a commodity festival score. The calculation of commodity festival scores mainly aims to weaken the influence of promotions and to reflect whether the commodity has a festival best-selling characteristic. The higher the commodity festival score is, the more popular the commodity is during a festival, which indicates that the commodity belongs to a must-buy commodity during the festival. This filtering step filters out commodities having weak festival effects by filtering out those with fluctuation or locality values less than 0 in a festival score.

Step 7: determining an adjustment weight. The adjustment weight reflects an absolute quantity of a commodity during a festival, taking into account sales during the festival, promotions and sales of the commodity in an ordinary period. On the basis of weakening promotion and highlighting commodities with lower rankings in an ordinary period, influence of an absolute quantity of sales is taken into account, wherein the ranking in sales in an ordinary period is classified into five (1 to 5) classifications in a descending sequence in terms of sales of a category to which the commodity belongs among all categories, wherein each classification covers 20% of sales, and the ranking score is actually the ranking of the classification of the commodity. The higher the sales is, the lower the ranking is, in order for highlighting commodities with insignificant sales in an ordinary period. The specific formula is as follows:

the adjustment weight = (the festival sales / ln the festival promotion) * a sales ranking score of an ordinary period.

Step 8: determining a festival relative score of a commodity. The festival relative scores of commodities are used for comparing commodities with each other during the same festival, and making an adjustment based on the commodity festival scores. A relative commodity festival score = a commodity festival score * an adjustment weight.

Step 9: filtering a festival best-selling commodity. Commodities are arranged in a descending sequence based on results of the commodity festival relative scores, and those with higher rankings are filtered out as festival best-selling commodities. Calculations are performed respectively for different festivals to identify best-selling commodities during different festivals.

As can be seen from the aforesaid depictions, the following beneficial effects can be achieved from the technical solutions of the embodiments of the present invention:

1. A device for identifying a festival best-selling commodity takes into account more influential factors than mere sales volumes, and weakens the influence of promotions on sales to some extent and highlights the effects of different festivals. Therefore, The kind of commodities filtered out that way generally belong to necessities during the festivals, which helps dealers formulate their marketing strategies, e.g., bundling sales, advertisement presentation, promotion campaigns, etc., so as to attract user visits and facilitate brand recognition and exposure and sales opportunities of other non-festival commodities, and save unnecessary promotional costs.

2. By identifying festival best-selling commodities more accurately, an abrupt increase in sales during a festival may be explained. Identifying such abrupt increases help the projection and control of a general sales trend.

3. The calculation of a commodity festival score eliminates the influence of different lengths of influential times of different festivals and their sale trends, and enables comparisons of different festival effects for the same commodity and comparisons of festival effects of the same festival in different years. It is helpful to formulate a whole year or a quarterly promotional strategy for commodities to maximize the influence of a festival effect.

The basic principle of the present invention is depicted above with reference to the specific embodiments. However, note that it is understandable to an ordinary skilled person that all and any steps or components of the method and device according to the present invention can be implemented with hardware, firmware, software or the combination thereof in any computing devices (including a processor, a storage medium, etc.) or a network of computing devices. This can be carried out by an ordinary person skilled in the art with their basic programming skills upon the study of the depictions of the present invention.

Therefore, the object of the present invention can be implemented alternatively by running a program or a set of programs on any computing devices. The computing device can be a well-known generic device. Accordingly, the object of the present invention can be implemented alternatively by only program products including program codes for implementing the method or device. That is, such program products also constitute the prevent invention, and so do storage mediums on which such program products are stored. Obviously, the storage mediums can be any known storage mediums or any storage mediums to be developed in the future.

Furthermore, it should be noted that in the device and method of the present invention, obviously each component and each step can be decomposed and/or recombined. The decompositions and/or recombinations shall be deemed to be equivalent solutions of the present invention. Besides, the steps of the aforesaid series of processing can be performed following a temporal sequence naturally according to the depicted sequence, but it is not required to follow the temporal sequence. Some steps can be performed in parallel or independent of each other.

The aforesaid specific embodiments do not constitute limitation of the protection extent of the present invention. A person skilled in the art shall understand that, depending on design requirements and other factors, a variety of modifications, combinations, sub-combinations and substitutions are allowable. Any modifications, equivalent substitutions, improvements, etc. within the spirit and principle of the present invention shall be included in the protection scope of the present invention.

**Claims**

1. A method for determining a festival best-selling commodity, comprising:

   for each commodity in a plurality of commodities, based on a comparison of sales of the commodity during a predetermined festival to sales in a predetermined time period during which the festival lasts, calculating a best-selling degree of the commodity during the festival; and
   determining a commodity with a higher best-selling degree as the festival best-selling commodity.

2. The method according to claim 1, wherein the calculating a best-selling degree of the commodity during the festival comprises calculating according to the following formulae:

$$\text{fluctuation} = \text{festival sales} / \text{reference sales,}$$

$$\text{locality} = \text{mean daily festival sales} / \text{mean daily local sales,}$$

$$\text{the best-selling degree of the commodity during the festival} = (\text{the fluctuation} + \text{the locality}) * \text{an adjustment weight,}$$

   wherein the festival sales represents a sales volume of the commodity during the predetermined festival, the reference sales represents a sales volume of the commodity in a time period of a length the same as the festival preceding and following the festival, the mean daily festival sales represents mean daily sales of the commodity during the predetermined festival, the mean daily local sales represents mean daily sales of the commodity in a predetermined time period during which the festival lasts, and the adjustment weight represents a predetermined weight.

3. The method according to claim 1, wherein the calculating a best-selling degree of the commodity during the festival comprises calculating according to the following formulae:

$$\text{fluctuation} = \text{festival sales} / \text{reference sales} - \text{festival promotion} / \text{reference promotion,}$$

$$\text{locality} = \text{mean daily festival sales} / \text{mean daily local sales} - \text{mean daily festival promotion} / \text{mean daily local promotion, and}$$

$$\text{the best-selling degree of the commodity during the festival} = (\text{the fluctuation} + \text{the locality}) * \text{an adjustment weight,}$$

   wherein the festival sales represents a sales volume of the commodity during the predetermined festival, the reference sales represents a sales volume of the commodity in a time period of a length the same as the festival preceding and following the festival, the festival promotion represents a mean promotion discount amount generated by sale of the commodity at a promotional price during the predetermined festival, the reference promotion represents a mean promotion discount amount generated by sale of the commodity at a promotional price in a time period of a length the same as the festival preceding and following the festival, the mean daily festival sales represents mean daily sales of the commodity during the predetermined festival, the mean daily local sales represents mean daily sales in a predetermined time period during which the festival lasts, the mean daily festival promotion represents a mean daily promotion discount amount generated by sale of the commodity at a promotional price during the predetermined festival, the mean daily local promotion represents a mean daily promotion discount amount generated by sale of the commodity at a promotional price in a predetermined time period during which the festival lies, and the adjusting weight represents a predetermined weight.

4. The method according to claim 1, wherein the calculating a best-selling degree of the commodity during the festival comprises calculating according to the following formulae:

$$\text{fluctuation} = \ln (\text{festival sales} / \text{reference sales} - \text{festival promotion} / \text{reference promotion}),$$

$$\text{locality} = \ln (\text{mean daily festival sales} / \text{mean daily local sales} - \text{mean daily festival promotion} / \text{mean daily local promotion}), \text{ and}$$

$$\text{the best-selling degree of the commodity during the festival} = (\text{the fluctuation} + \text{the locality}) * \text{an adjustment weight},$$

wherein the festival sales represents a sales volume of the commodity during the predetermined festival, the reference sales represents a sales volume of the commodity in a length the same as the festival preceding and following the festival, the mean daily festival promotion represents a mean promotion discount amount generated by sale of the commodity at a promotional price during the predetermined festival, the reference promotion represents a mean promotion discount amount generated by sale of the commodity at a promotional price in a time period of a length the same as the festival preceding and following the festival, the mean daily festival sales represents mean daily sales of the commodity during the predetermined festival, the mean daily local sales represents mean daily sales in a predetermined time period during which the festival lasts, the mean daily festival promotion represents a mean daily promotion discount amount generated by sale of the commodity at a promotional price during the predetermined festival, the mean daily local promotion represents a mean daily promotion discount amount generated by sale of the commodity at a promotional price in a predetermined time period during which the festival lasts, ln(*) represents a natural logarithm, and the adjusting weight represents a predetermined weight.

5. The method according to any one of claims 2 to 4, wherein the adjustment weight is calculated according to the following formula:

$$\text{the adjustment weight} = (\text{the festival sales} / \ln \text{the festival promotion}) * \text{an ordinary period sales ranking score},$$

wherein the ordinary period sales ranking score is a value determined based on a ranking of sales of a category to which the commodity belongs among all categories, and a category with a lower ranking corresponds to a higher ordinary period sales ranking score.

6. A device for determining a festival best-selling commodity, comprising:

a commodity festival scoring module for calculating, for each commodity in a plurality of commodities and based on a comparison of sales of the commodity during a predetermined festival to sales in a predetermined time period during which the festival lasts, a best-selling degree of the commodity during the festival; and
a festival best-selling commodity identifying module for determining a commodity with a higher best-selling degree as the festival best-selling commodity.

7. The device according to claim 6, wherein the commodity festival scoring module is further used for calculating according to the following formulae:

$$\text{fluctuation} = \text{festival sales} / \text{reference sales,}$$

$$\text{locality} = \text{mean daily festival sales} / \text{mean daily local sales, and}$$

$$\text{the best-selling degree of the commodity during the festival} = (\text{the fluctuation} + \text{the locality}) * \text{an adjustment weight,}$$

wherein the festival sales represents a sales volume of the commodity during the predetermined festival, the reference sales represents a sales volume of the commodity in a time period of a length the same as the festival preceding and following the festival, the mean daily festival sales represents mean daily sales of the commodity during the predetermined festival, the mean daily local sales represents mean daily sales of the commodity in a predetermined time period during which the festival lasts, and the adjustment weight represents a predetermined weight.

8. The device according to claim 6, wherein the commodity festival scoring module is further used for calculating according to the following formulae:

$$\text{fluctuation} = \text{festival sales} / \text{reference sales} - \text{festival promotion} / \text{reference promotion,}$$

$$\text{locality} = \text{mean daily festival sales} / \text{mean daily local sales} - \text{mean daily festival promotion} / \text{mean daily local promotion, and}$$

$$\text{the best-selling degree of the commodity during the festival} = (\text{the fluctuation} + \text{the locality}) * \text{an adjustment weight,}$$

wherein the festival sales represents a sales volume of the commodity during the predetermined festival, the reference sales represents a sales volume of the commodity in a time period of a length the same as the festival preceding and following the festival, the mean daily festival promotion represents a mean promotion discount amount generated by sale of the commodity at a promotional price during the predetermined festival, the reference promotion represents a mean promotion discount amount generated by sale of the commodity at a promotional price in a time period of a length the same as the festival preceding and following the festival, the mean daily festival sales represents mean daily sales of the commodity during the predetermined festival, the mean daily local sales represents mean daily sales in a predetermined time period during which the festival lasts, the mean daily festival promotion represents a mean daily promotion discount amount generated by sale of the commodity at a promotional price during the predetermined festival, the mean daily local promotion represents a mean daily promotion discount amount generated by sale of the commodity at a promotional price in a predetermined time period during which the festival lasts, and the adjusting weight represents a predetermined weight.

9. The device according to claim 6, wherein the commodity festival scoring module is further used for calculating according to the following formulae:

$$\text{fluctuation} = \ln (\text{festival sales} / \text{reference sales} - \text{festival promotion} / \text{reference promotion}),$$

locality = ln (mean daily festival sales / mean daily local sales – mean daily festival promotion / mean daily local promotion), and the best-selling degree of the commodity during the festival = (the fluctuation + the locality) * an adjustment weight, wherein the festival sales represents a sales volume of the commodity during the predetermined festival, the reference sales represents a sales volume of the commodity in a length the same as the festival preceding and following the festival, the mean daily festival promotion represents a mean promotion discount amount generated by sale of the commodity at a promotional price during the predetermined festival, the reference promotion represents a mean promotion discount amount generated by sale of the commodity at a promotional price in a time period of a length the same as the festival preceding and following the festival, the mean daily festival sales represents mean daily sales of the commodity during the predetermined festival, the mean daily local sales represents mean daily sales in a predetermined time period during which the festival lasts, the mean daily festival promotion represents a mean daily promotion discount amount generated by sale of the commodity at a promotional price during the predetermined festival, the mean daily local promotion represents a mean daily promotion discount amount generated by sale of the commodity at a promotional price in a predetermined time period during which the festival lasts, ln(*) represents a natural logarithm, and the adjusting weight represents a predetermined weight.

10. The device according to any one of claims 7 to 9, wherein the commodity festival scoring module is further used for calculating according to the following formulae:

the adjustment weight = (the festival sales / ln the festival promotion) * an ordinary period sales ranking score,

wherein the ordinary period sales ranking score is a value determined based on a ranking of sales of the category to which the commodity belongs among all categories, and a category with a lower ranking corresponds to a higher ordinary period sales ranking score.

for each commodity in a plurality of commodities, based on a comparison of sales of the commodity during a predetermined festival tosales in a predetermined time period during which the festival lasts, calculating a best-selling degree of the commodity during the festival

S11

determining a commodity with a higher best-selling degree as the festival best-selling commodity.

S12

## FIG. 1

20

device for determining a festival best-selling commodity

202

dealer system

21

commodity festival scoring module

201

festival best-selling commodity identifying module

festival-related database

22

## FIG. 2

start

quantifying and acquiring festival-related data **1**

classifying festivals **2**

pruning sales data **3**

calculating score indexes **4**

getting commodity scores **5**

filtering commodity scores **6**

determining an adjustment weight **7**

determining a commodity festival relative score **8**

filtering a festival best-selling commodity **9**

End

FIG. 3

# INTERNATIONAL SEARCH REPORT

| | International application No. |
|---|---|
| | PCT/CN2013/074109 |

**A.    CLASSIFICATION OF SUBJECT MATTER**

G06Q 30/02 (2012.01) i

According to International Patent Classification (IPC) or to both national classification and IPC

**B.    FIELDS SEARCHED**

Minimum documentation searched (classification system followed by classification symbols)

IPC: G06Q; G06F

Documentation searched other than minimum documentation to the extent that such documents are included in the fields searched

Electronic data base consulted during the international search (name of data base and, where practicable, search terms used)

DWPI, SIPOABS, CNABS, CNKI, promot+, sale+, goods, volume, demand, season, time, festival, holiday, average

**C.    DOCUMENTS CONSIDERED TO BE RELEVANT**

| Category* | Citation of document, with indication, where appropriate, of the relevant passages | Relevant to claim No. |
|---|---|---|
| Y | CN 102346894 A (ALIBABA GROUP HOLDING CO., LTD.) 08 February 2012 (08.02.2012) description, paragraphs [0003], [0033], [0035], [0036], [0038], [0040], [0041] and [0057] | 1-10 |
| Y | CN 1776729 A (IBM CORP.) 24 May 2006 (24.05.2006) description, page 5, lines 8 and 9, page 12, line 25 to page 13 line 15, and figure 5 | 1-10 |
| PX | CN 102938124 A (BEIJING JINGDONG CENTURY TRADING CO.) 20 February 2013 (20.02.2013) claims 1-10 | 1-10 |

☐ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 June 2013 (09.06.2013) | 25 July 2013 (25.07.2013) |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer TIAN, Bing Telephone No. (86-10) 62411645 |
|---|---|

Form PCT/ISA /210 (second sheet) (July 2009)

## INTERNATIONAL SEARCH REPORT
Information on patent family members

| | International application No. |
|---|---|
| | PCT/CN2013/074109 |

| Patent Documents referred in the Report | Publication Date | Patent Family | Publication Date |
|---|---|---|---|
| CN 102346894 A | 08.02.2012 | EP 2577591 A1 | 10.04.2013 |
| | | WO 2012018388 A1 | 09.02.2012 |
| | | US 2012036037 A1 | 09.02.2012 |
| CN 1776729 A | 24.05.2006 | US 2006106664 A1 | 18.05.2006 |
| CN 102938124 A | 20.02.2013 | None | |

Form PCT/ISA /210 (patent family annex) (July 2009)